# EUROPEAN PATENT APPLICATION

(11) **EP 2 469 873 A2**
(43) Date of publication of application: **27.06.2012**
(21) Application number: 11178079.7
(22) Date of filing: 19.08.2011
(51) Int. Cl.: H04N 13/04

(54) **Method of driving display panel and display apparatus performing the method**

(30) Priority: 23.12.2010 KR 20100133611
(71) Applicant: Samsung Electronics Co., Ltd., Yeongtong-gu Suwon-city Gyeonggi-do 442-742 (KR)
(72) Inventor: Lee, Byoung-Jun, 402 Chungcheongnam-do (KR); Moon, Seung-Hwan, 103-2604 Chungcheongnam-do (KR); Kim, Yun-Jae, Cubic-1306 Chungcheongnam-do (KR); Goo, Nam-Hee, 105-1106 Chungcheongnam-do (KR); Kim, Myoung-Chul, 901-604 Gyeonggi-do (KR); Kim, Bo-Ram, Cubic-403 Chungcheongnam-do (KR); Lee, Jong-Yoon, 11-204 Gyeonggi-do (KR)
(74) Representative: Zeitler, Stephan

(57) **Abstract**

A method of driving a display panel determines whether an image mode of an image signal is a 2D flat image mode or a 3D stereoscopic image mode. A first reverse signal and a second reverse signal different from the first reverse signal are generated according to the image mode. The image signal is converted to a first polarity data voltage or a second polarity data voltage with respect to a reference voltage based on the first reverse signal or the second reverse signal, and the first polarity data voltage or the second polarity data voltage is outputted to a display panel. During the 3D stereoscopic image mode, polarities of data voltages are reversed at a period of a plurality of frames, so that display quality of the 3D stereoscopic image may be enhanced.

## Description

### BACKGROUND

### 1. Technical Field

Exemplary embodiments of the present invention relate to a method of driving a display panel and a display apparatus performing the method of driving the display panel. More particularly, exemplary embodiments of the present invention relate to a method of driving a display panel enhancing display quality and a display apparatus performing the method of driving the display panel.

### 2. Discussion of the Related Art

Demand for three-dimensional (3D) stereoscopic images for use in game applications or movies has called for various stereoscopic image display apparatuses.

A stereoscopic image display apparatus displays a stereoscopic image using a principle of binocular parallax through a viewer's two eyes. For example, since the left and right eyes of the viewer are spaced apart from each other, two different images with different angles are perceived by the viewer's brain. The perceived images are mixed in the viewer's brain. Through this series of processes, the viewer's brain may recognize the two images as a stereoscopic image.

As one of methods of implementing stereoscopic images using the binocular parallax, there is a liquid crystal shutter glasses type method.

Generally, an LCD apparatus employing the liquid crystal shutter glasses type method displays a left image for left eye and a right image for right eye using a time-division method, and is thereby driven at a high frequency. High-frequency driving causes an insufficient pixel charging rate, thus deteriorating display quality. Moreover, power consumption of the LCD apparatus is increased.

### SUMMARY

Exemplary embodiments of the present invention provide a method of driving a display panel capable of enhancing display quality of 3D stereoscopic images and a display apparatus performing the method.

According to an exemplary embodiment of the present invention, there is provided a method of driving a display panel, comprising determining an image mode based on a received image signal, outputting a reverse signal based on the image mode, and reversing at a predetermined period polarities of data voltages based on the reverse signal.

According to an exemplary embodiment of the present invention, a method of driving a display panel determines an image mode of an image signal is a 2D flat image mode or a 3D stereoscopic image mode. A first reverse signal and a second reverse signal different from the first reverse signal are generated according to the determined image mode. The image signal is converted to a first polarity data voltage or a second polarity data voltage with respect to a reference voltage based on the first reverse signal or the second reverse signal, and the first polarity data voltage or the second polarity data voltage is outputted to a display panel.

According to an exemplary embodiment, the first reverse signal may be generated when the determined image mode is the 2D flat image mode, and the second reverse signal having a frame period different from a frame period of the first reverse signal may be generated when the determined image mode is the 3D stereoscopic image mode.

According to an exemplary embodiment, the method further may include outputting the first polarity data voltage of a left-eye image frame to the display panel during an N-th frame, outputting the first polarity data voltage of a right-eye image frame to the display panel during an (N+1)-th frame, outputting the second polarity data voltage of the left-eye image frame to the display panel during an (N+2)-th frame, and outputting the second polarity data voltage of the right-eye image frame to the display panel during an (N+3)-th frame. Here, N is a natural number.

According to an exemplary embodiment, the method may further include outputting the first polarity data voltage of a left-eye image frame to the display panel during an N-th frame, outputting the second polarity data voltage of a right-eye image frame to the display panel during an (N+1)-th frame, outputting the second polarity data voltage of the left-eye image frame to the display panel during an (N+2)-th frame, and outputting the first polarity data voltage of the right-eye image frame to the display panel during an (N+3)-th frame. Here, N is a natural number.

According to an exemplary embodiment of the present invention, a display apparatus includes a display panel displaying an image, a controller, and a data driver. The controller determines whether an image mode of an image signal is a 2D flat image mode or a 3D stereoscopic image mode and generates a first reverse signal and a second reverse signal different from the first reverse signal according to the determined image mode. The data driver converts the image signal to a first polarity data voltage or a second polarity data voltage with respect to a reference voltage based on the first reverse signal or the second reverse signal, and outputs the first polarity data voltage or the second polarity data voltage to a display panel.

According to the embodiments of the present invention, during the 3D stereoscopic image mode, the polarities of the data voltages are reversed at a period of a plurality of frames, so that display quality of the 3D stereoscopic image is enhanced. According to the embodiments, the polarities of the data voltages are reversed at a pixel column period during a frame, so that power consumption is decreased, and a charging rate is increased.

### BRIEF DESCRIPTION OF THE DRAWINGS

The embodiments of the present invention will become more apparent by reference to the following detailed description when considered in conjunction with the accompanying drawings, in which:

FIG 1 is a block diagram of a display apparatus according to an exemplary embodiment of the present invention;

FIG 2 is a flow chart for describing a method for driving a display panel of FIG 1;

FIGS. 3A and 3B are timing charts of control signals inputted to a data driver of FIG 1;

FIG 4 is a conceptual diagram for describing a method for driving the display panel according to the control signals of FIG 3B;

FIGS. 5A and 5B are timing charts of control signals inputted to a data driver according to an exemplary embodiment of the present invention;

FIG 6 is a conceptual diagram for describing a method for driving a display panel according to the control signals of FIG 5B;

FIGS. 7A and 7B are timing charts of control signals inputted to a data driver according to an exemplary embodiment of the present invention;

FIG 8 is a conceptual diagram for describing a method for driving a display panel according to the control signals of FIG 7B;

FIG 9 is a timing chart of control signals inputted to a data driver according to an exemplary embodiment of the present invention;

FIG 10 is a conceptual diagram for describing a method for driving a display panel according to the control signals of FIG 9;

FIG 11 is a timing chart of control signals inputted to a data driver according to an exemplary embodiment of the present invention; and

FIG 12 is a conceptual diagram for describing a method for driving a display panel according to the control signals of FIG 11.

### DETAILED DESCRIPTION

Hereinafter, exemplary embodiments of the present invention will be described in detail with reference to the accompanying drawings, wherein the same numbers may be used to denote the same or substantially the same elements throughout the drawings and the specification.

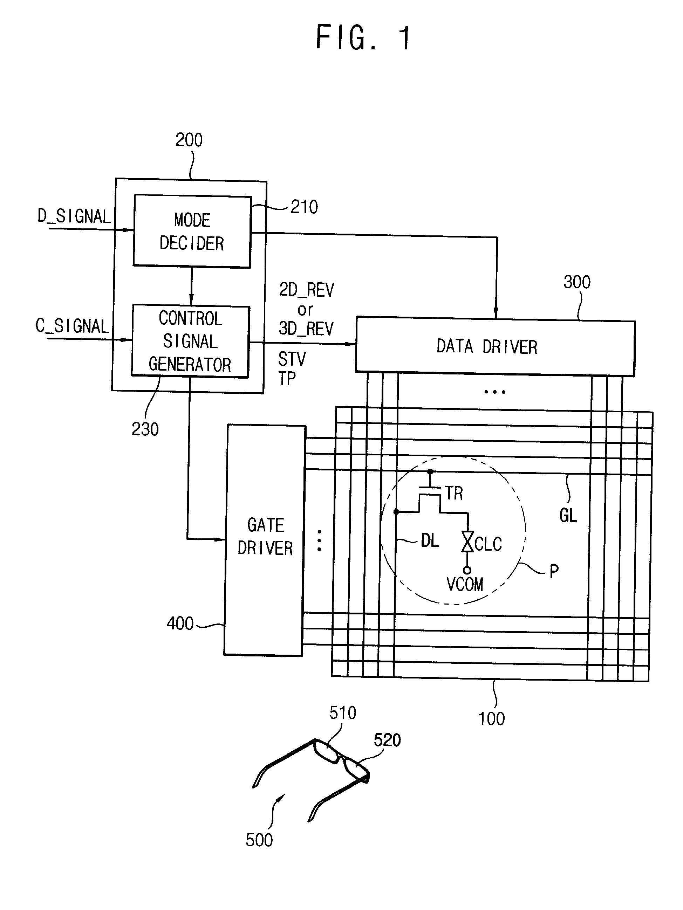

FIG 1 is a block diagram of a display apparatus according to an exemplary embodiment of the present invention.

Referring to FIG 1, the display apparatus includes a display panel 100, a controller 200, a data driver 300, a gate driver 400, and a pair of shutter glasses 500.

The display panel 100 includes a plurality of data lines DL, a plurality of gate lines GL crossing the data lines DL, and a plurality of pixels P. Each of the pixels P includes a switching element TR connected to the data and gate lines GL and DL, and a liquid crystal capacitor CLC connected to the switching element TR. A data voltage provided from the data line DL is applied to a first electrode of the liquid crystal capacitor CLC, and a reference voltage (or a common voltage) Vcom is applied to a second electrode of the liquid crystal capacitor CLC. According to a voltage difference between the first and second electrodes of the liquid crystal capacitor CLC, an arrangement direction of liquid crystal molecules is adjusted to display a grayscale.

The controller 200 includes a mode decider 210 and a control signal generator 230. The mode decider 210 determines an image mode of an image signal D_SIGNAL based on an information signal included in the received image signal D_SIGNAL. For example, the mode decider 210 determines whether the received image signal D_SIGNAL is a two-dimensional (2D) flat image or a three-dimensional (3D) stereoscopic image. According to an embodiment, a frame frequency of image data for the 2D flat image may be about 60 Hz or about 120 Hz. According to an embodiment, a frame frequency of image data for the 3D stereoscopic image may be about 20 Hz.

The control signal generator 230 generates control signals controlling the data driver 300 based on an original control signal C_SIGNAL received from an external device (not shown). The control signals may include a vertical synchronizing signal STV, a load signal TP, and a reverse signal. The vertical synchronizing signal STV is a start signal of a frame, the load signal TP is a signal loading the data voltage into the data line DL at a one-horizontal-line period 1H, and the reverse signal is a control signal controlling a polarity of the data voltage.

The reverse signal includes a 2D reverse signal 2D_REV and a 3D reverse signal 3D_REV. Reversing methods for the 2D and 3D reverse signals are different from each other. The reversing methods may include a method of reversing the polarity of the data voltage at a K-horizontal-line period in a frame (K is a natural number), and a method of reversing the polarity of the data voltage applied to a substantially same pixel in sequential frames. The control signal generator 230 generates the 2D reverse signal 2D_REV and the 3D reverse signal 3D_REV having frame frequencies different from each other according to the image mode, and provides the 2D reverse signal 2D_REV and the 3D reverse signal 3D_REV to the data driver 300.

The data driver 300 converts digital image data to analogue image data based on the control signals provided from the controller 200. According to an embodiment, the data driver 300 controls the polarity of the data voltage based on the 2D reverse signal 2D_REV or the 3D reverse signal 3D_REV provided from the control signal generator 230 according to the image mode. The data voltage has a first polarity (positive (+) polarity) higher than the reference voltage, and a second polarity (negative (-) polarity) lower than the reference voltage. The polarities of the data voltages, which are adjacent to each other and inputted from the data driver 300, may be reversed with respect to each other.

The gate driver 400 generates a plurality of gate signals based on the control signals received from the control signal generator 230, and sequentially outputs the gate signals to the gate lines GL.

The shutter glasses 500 include left-eye and right-eye shutters 510 and 520. The shutter glasses 500 are driven according to an image displayed on the display panel 100 in the 3D stereoscopic image mode. For example, when the display panel 100 displays a left-eye image frame, the left-eye shutter 510 is open, and the right-eye shutter 520 is closed. When the display panel 100 displays a right-eye image frame, the left-eye shutter 510 is closed, and the right-eye shutter 520 is open. As a consequence, the viewer recognizes the left-eye and right-eye images displayed on the display panel 100.

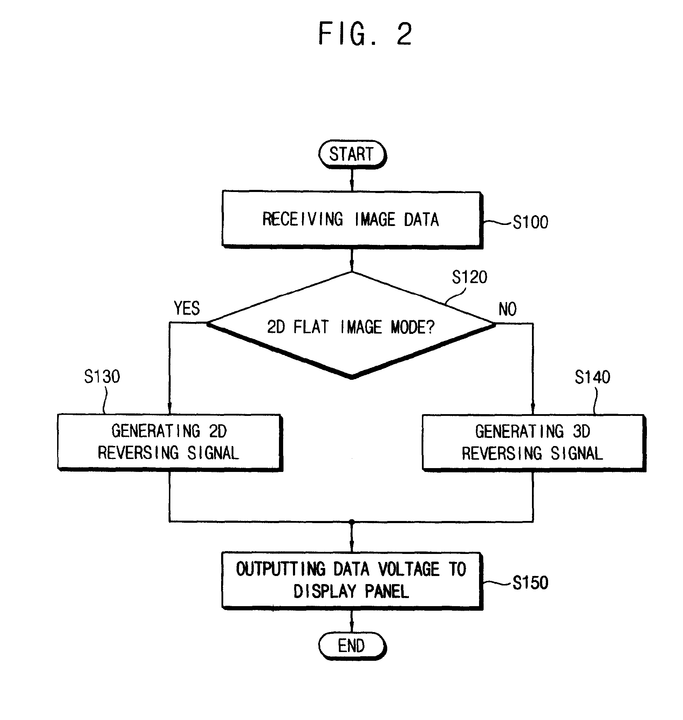

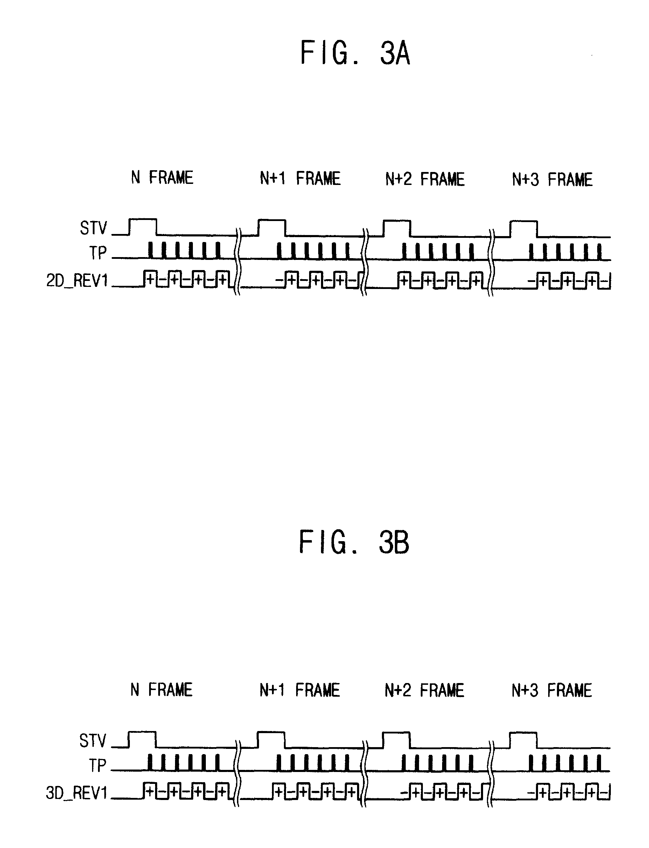

FIG 2 is a flow chart for describing a method for driving the display panel of FIG 1. FIGS. 3A and 3B are timing charts of the control signals inputted to the data driver of FIG 1.

Referring to FIGS. 1 and 2, the controller 200 receives the image data and the original control signals (step S100).

The mode decider 210 determines the image mode of the image data (step S120).

The mode decider 210 controls the control signal generator 230 according to the image mode of the image data. The control signal generator 230 generates a 2D reverse signal 2D_REV1, when the image mode of the image data is the 2D flat image mode (step S130).

Referring to FIG 3A, the 2D reverse signal 2D_REV1 reverses polarities of data voltages at a one-horizontal-line period 1H in a frame and at a one-frame period.

For example, when the data driver 300 receives a toggle of the vertical synchronizing signal STV and a toggle of the load signal TP, the data driver 300 determines polarities of data voltages of horizontal lines according to the 2D reverse signal 2D_REV1 and outputs the data voltages to the display panel 100. Hereinafter, polarities of data voltages applied to pixels of an N-th pixel column among data voltages in horizontal lines are described as an example. Here, N is a natural number.

Therefore, during an N-th frame N FRAME, the data driver 300 outputs data voltages whose polarities are reversed at a one-horizontal-line period 1H in an order of positive (+) and negative (-) polarities to pixels of the N-th pixel column. During an (N+1)-th frame (N+1) FRAME, the data driver 300 outputs data voltages whose polarities are reversed at a one-frame period to pixels of the N-th pixel column. For example, the data voltages whose polarities are reversed with respect to the data voltages applied to the pixels of the N-th pixel column during the N-th frame N FRAME and have an order of negative (-) and positive (+) polarities are applied to the pixels of the N-th pixel column during the (N+1)-th frame (N+1) FRAME During an (N+2)-th frame (N+2) FRAME, the data driver 300 outputs data voltages whose polarities are reversed with respect to the polarities of the data voltages applied during the (N+1)-th frame (N+1) FRAME and have an order of positive (+) and negative (-) polarities to the pixels of the N-th pixel column. During an (N+3)-th frame (N+3) FRAME, the data driver 300 outputs data voltages whose polarities are reversed with respect to the polarities of the data voltages applied during the (N+2)-th frame (N+2) FRAME and have an order of negative (-) and positive (+) polarities to the pixels of the N-th pixel column (step S150).

As such, data voltages applied to the display panel 100 are reversed at a one-frame period in the 2D flat image mode.

The control signal generator 230 generates the 3D reverse signal 3D_REV1, when the image mode of the image data is the 3D stereoscopic image mode (Step S 140). When the image mode of the image data is the 3D stereoscopic image mode, the image data includes left-eye image frames and right-eye image frames. For example, the left-eye image frames and the right-eye image frames are received with a frequency of about 120 Hz.

Referring to FIG 3B, the 3D reverse signal 3D_REV1 reverses polarities of data voltages at a one-horizontal-line period 1H in a frame and at a two-frame period.

For example, during the N-th frame N FRAME, the data driver 300 outputs data voltages whose polarities are reversed at a one-horizontal-line period 1H and have an order of positive (+) and negative (-) polarities to the pixels of the N-th pixel column. During the (N+1)-th frame (N+1) FRAME, the data driver 300 outputs data voltages having polarities the same or substantially the same as the polarities of the data voltages applied to the pixels of the N-th pixel column during the N-th frame N FRAME to the pixels of the N-th pixel column. During the (N+2)-th frame (N+2) FRAME, the data driver 300 outputs data voltages whose polarities are reversed at a two-frame period. For example, data voltages whose polarities are reversed with respect to the polarities of the data voltages applied to the pixels of the N-th pixel column during the (N+1)-th frame (N+1) FRAME and have an order of negative (-) and positive (+) polarities are applied to the pixels of the N-th pixel column during the (N+2)-th frame (N+2) FRAME During the (N+3)-th frame (N+3) FRAME, the data driver 300 outputs the data voltages having polarities the same or substantially the same as the polarities of the data voltages applied to the pixels of the N-th pixel column during the (N+2)-th frame (N+2) FRAME to the pixels of the N-th pixel column (step S150).

Accordingly, the data voltages applied to the display panel 100 are reversed at a two-frame period in the 3D stereoscopic image mode.

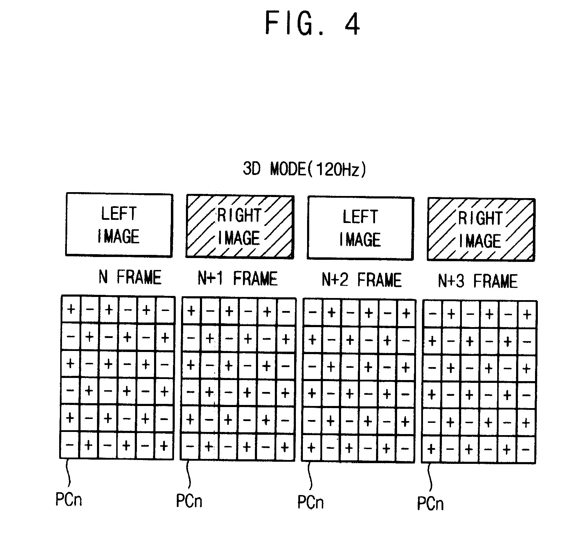

FIG 4 is a conceptual diagram for describing a method for driving the display panel according to the control signals of FIG 3B.

Referring to FIG 4, in the 3D stereoscopic image mode, the data driver 300 outputs data voltages of a left-eye image frame to the display panel 100 during the N-th frame N FRAME, outputs data voltages of a right-eye image frame to the display panel 100 during the (N+1)-th frame (N+1) FRAME, outputs data voltages of a left-eye image frame to the display panel 100 during the (N+2)-th frame (N+2) FRAME, and outputs data voltages of a right-eye image frame to the display panel 100 during the (N+3)-th frame (N+3) FRAME. For example, the display panel 100 is driven at a frame frequency of about 120 Hz.

The polarities of the data voltages are reversed based on the 3D reverse signal 3D_REV1 of FIG. 3B at a two-frame period. Regarding the polarities of the data voltages applied to the pixels of the N-th pixel columns PCn, the data voltages of the left-eye image frame of the N-th frame N FRAME have an order of positive (+), negative (-), positive (+), negative (-), positive (+), and negative (-) polarities, and the data voltages of the left-eye image frame of the N+2-th frame N+2 FRAME have an order of negative (-), positive (+), negative (-), positive (+), negative (-), and positive (+) polarities. According to an embodiment, the data voltages of the right-eye image frame of the (N+1)-th frame (N+1) FRAME have an order of positive (+), negative (-), positive (+), negative (-), positive (+), and negative (-) polarities, and the data voltages of the right-eye image frame of the (N+3)-th frame (N+3) FRAME have an order of negative (-), positive (+), negative (-), positive (+), negative (-), and positive (+) polarities.

As a consequence, the polarities of the data voltages of the left-eye image frame applied to the display panel 100 during the N-th frame N FRAME are reversed with respect to the polarities of the data voltages of the left-eye image frame applied to the display panel 100 during the (N+2)-th frame (N+2) FRAME, and the polarities of the data voltages of the right-eye image frame applied to the display panel 100 during the (N+1)-th frame (N+1) FRAME are reversed with respect to the polarities of the data voltages of the right-eye image frame applied to the display panel 100 during the (N+3)-th frame (N+3) FRAME

As a result, the data voltages of the sequential left-eye image frames or the sequential right-eye image frames have different polarities from each other. Accordingly, a DC voltage is prevented from being charged to a liquid crystal layer of the display panel 100, which displays the left-eye image frame and the right-eye image frame, thus enhancing display quality.

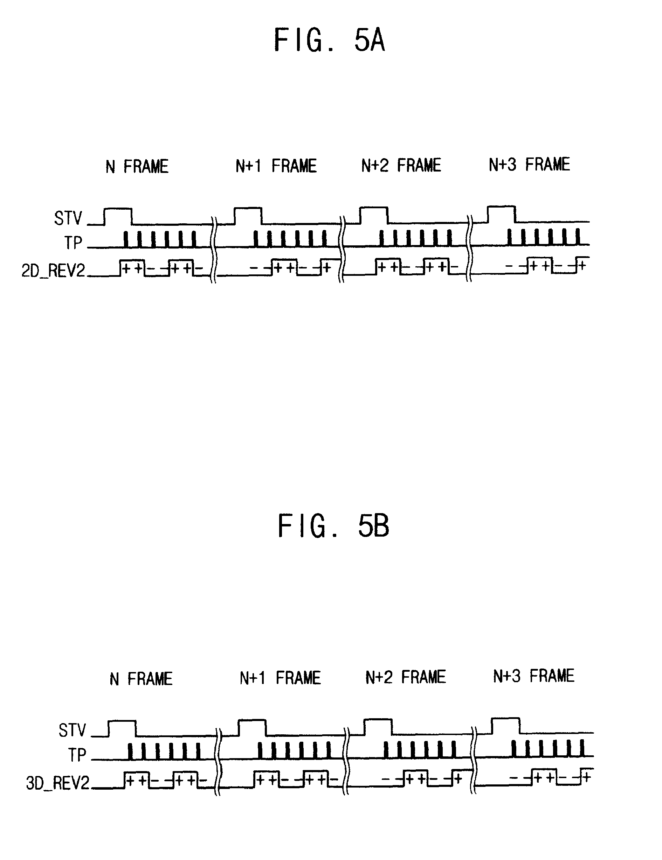

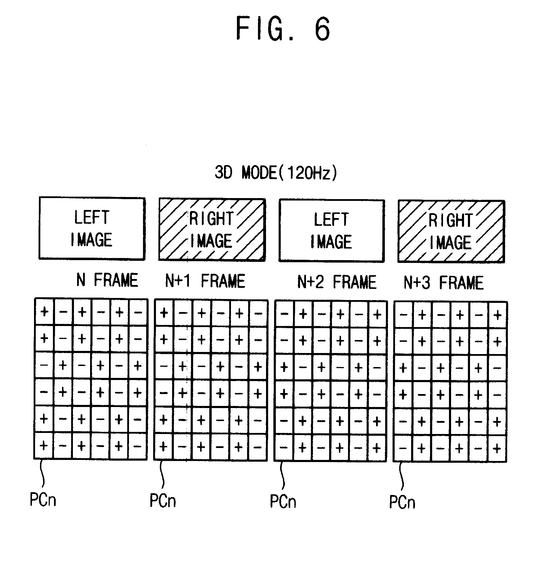

FIGS. 5A and 5B are timing charts of control signals inputted to a data driver according to an exemplary embodiment of the present invention. FIG 6 is a conceptual diagram for describing a method for driving a display panel according to the control signals of FIG. 5B.

Referring to FIG 5A, a 2D reverse signal 2D_REV2 reverses polarities of data voltages at a two-horizontal-line period in a frame and at a one-frame period.

For example, during an N-th frame N FRAME, the data driver 300 outputs data voltages whose polarities are reversed at a two-horizontal-line period in an order of positive (+) and positive (+) polarities, and negative (-) and negative (-) polarities to the pixels of the N-th pixel column. During an (N+1)-th frame (N+1) FRAME, the data driver 300 outputs data voltages whose polarities are reversed at a one-frame period to the pixels of the N-th pixel column. For example, data voltages whose polarities are reversed with respect to the polarities of the data voltages applied to the pixels of the N-th pixel column during the N-th frame N FRAME and have an order of negative (-) and negative (-) polarities, and positive (+) and positive (+) polarities are applied to the pixels of the N-th pixel column during the (N+1)-th frame (N+1) FRAME During an (N+2)-th frame (N+2) FRAME, the data driver 300 outputs data voltages whose polarities are reversed with respect to the polarities of the data voltages applied to the pixels of the N-th pixel column during the (N+1)-th frame (N+1) FRAME and have an order of positive (+) and positive (+) polarities, and negative (-) and negative (-) polarities to the pixels of the N-th pixel column. During an (N+3)-th frame (N+3) FRAME, the data driver 300 outputs data voltages whose polarities are reversed with respect to the polarities of the data voltages applied to the pixels of the N-th pixel colum during the (N+2)-th frame (N+2) FRAME and have an order of negative (-) and negative (-) polarities, and positive (+) and positive (+) polarities to the pixels of the N-th pixel column.

As such, the data voltages applied to the display panel 100 are reversed at a one-frame period in the 2D flat image mode.

Referring to FIG 5B, a 3D reverse signal 3D_REV2 reverses polarities of data voltages at a two-horizontal-line period in a frame and at a two-frame period.

For example, during the N-th frame N FRAME, the data driver 300 outputs data voltages whose polarities are reversed at a two-horizontal-line period and have an order of positive (+) and positive (+) polarities, and negative (-) and negative (-) polarities to the pixels of the N-th pixel column. During the (N+1)-th frame (N+1) FRAME, the data driver 300 outputs data voltages having polarities the same or substantially the same as the polarities of the data voltages applied to the pixels of the N-th pixel column during the N-th frame N FRAME to the pixels of the N-th pixel column. During the (N+2)-th frame (N+2) FRAME, the data driver 300 outputs data voltages whose polarities are reversed at a two-frame period to the pixels of the N-th pixel column. For example, data voltages whose polarities are reversed with respect to the data voltages applied to the pixels of the N-th pixel column during the (N+1)-th frame (N+1) FRAME and have an order of negative (-) and negative (-) polarities, and positive (+) and positive (+) polarities are applied to the pixels of the N-th pixel column during the (N+2)-th frame (N+2) FRAME During the (N+3)-th frame N+3 FRAME, the data driver 300 outputs data voltages having polarities the same or substantially the same as the polarities of the data voltages applied to the pixels of the N-th pixel column during the (N+2)-th frame (N+2) FRAME to the pixels of the N-th pixel column.

As a consequence, the data voltages applied to the display panel 100 are reversed at a two-frame period in the 3D stereoscopic image mode.

Referring to FIGS. 5B and 6, the polarities of the data voltages are reversed based on the 3D reverse signal 3D_REV2 at a two-frame period. Regarding the polarities of the data voltages applied to the pixels of the N-th pixel columns PCn, the data voltages of a left-eye image frame of the N-th frame N FRAME have an order of positive (+), positive (+), negative (-), negative (-), positive (+), and positive (+) polarities, and the data voltages of a left-eye image frame of the (N+2)-th frame (N+2) FRAME have an order of negative (-), negative (-), positive (+), positive (+), negative (-), and negative (-) polarities. According to an embodiment, the data voltages of a right-eye image frame of the (N+1)-th frame (N+1) FRAME have an order of positive (+), positive (+), negative (-), negative (-), positive (+), and positive (+) polarities, and the data voltages of a right-eye image frame of the (N+3)-th frame (N+3) FRAME have an order of negative (-), negative (-), positive (+), positive (+), negative (-), and negative (-) polarities.

As a consequence, the data voltages of the sequential left-eye image frames or the sequential right-eye image frames have different polarities from each other. Accordingly, a DC voltage is prevented from being charged to a liquid crystal layer of the display panel 100 displaying the left-eye image frame or the right-eye image frame, thus enhancing display quality.

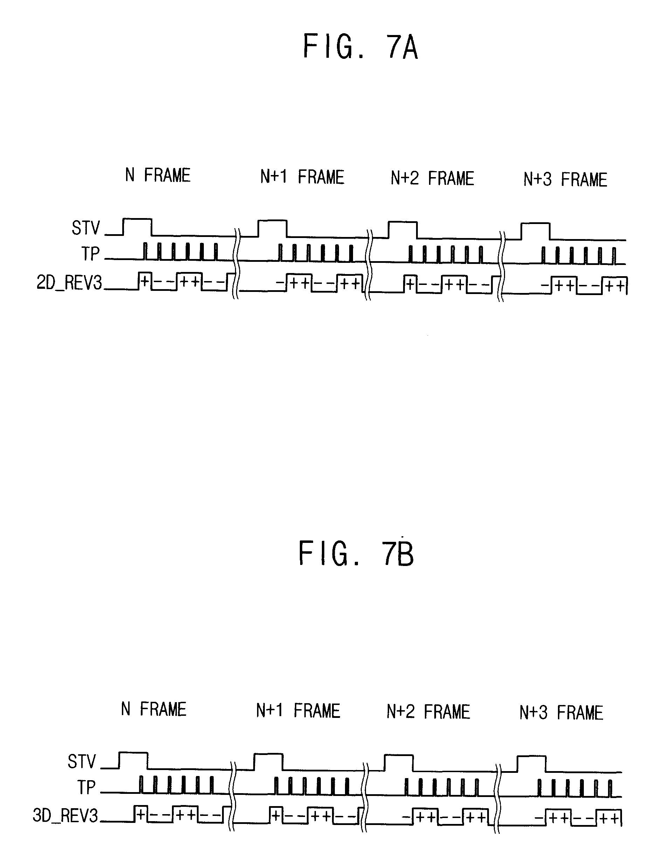

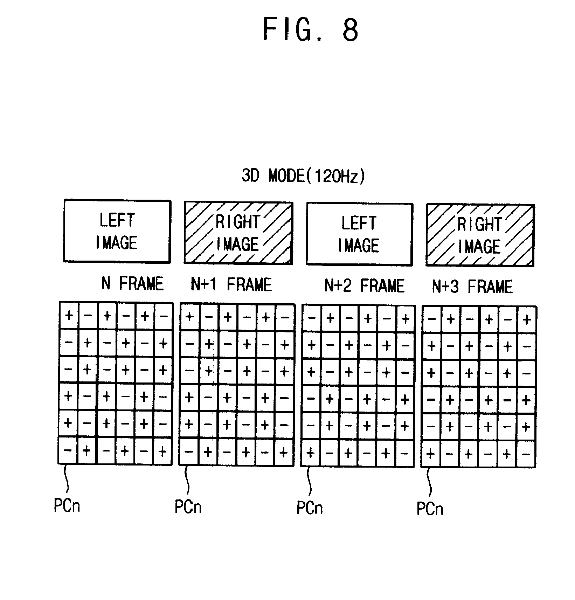

FIGS. 7A and 7B are timing charts of control signals inputted to a data driver according to an exemplary embodiment of the present invention. FIG 8 is a conceptual diagram for describing a method for driving a display panel according to the control signals of FIG. 7B.

Referring to FIG 7A, a 2D reverse signal 2D_REV3 reverses polarities of data voltages at a (1+2)-horizontal-line period in a frame and at a one-frame period. For example, during a frame, the 2D reverse signal 2D_REV3 reverses polarities of data voltages of first and second horizontal lines to each other, and reverses polarities of data voltages from the second horizontal line to a last horizontal line at a two-horizontal-line period. According to an embodiment, the 2D reverse signal 2D_REV3 reverses the polarities of the data voltages at a one-frame period.

For example, during an N-th frame N FRAME, the data driver 300 outputs data voltages whose polarities are reversed at a (1+2)-horizontal-line period and have an order of positive (+), negative (-), negative (-), positive (+), positive (+), negative (-), and negative (-) polarities to the pixels of the N-th pixel column. During an (N+1)-th frame (N+1) FRAME, the data driver 300 outputs data voltages whose polarities are reversed at a one-frame period to the pixels of the N-th pixel column. For example, data voltages whose polarities are reversed with respect to the polarities of the data voltages applied to the pixels of the N-th pixel column during the N-th frame N FRAME and have an order of negative (-), positive (+), positive (+), negative (-), negative (-), positive (+), and positive (+) polarities are applied to the pixels of the N-th pixel column during the (N+1)-th frame (N+1) FRAME During an (N+2)-th frame (N+2) FRAME, the data driver 300 outputs data voltages whose polarities are reversed with respect to the polarities of the data voltages applied to the pixels of the N-th pixel column during the (N+1)-th frame (N+1) FRAME and have an order of positive (+), negative (-), negative (-), positive (+), positive (+), negative (-), and negative (-) polarities to the pixels of the N-th pixel column. During an (N+3)-th frame (N+3) FRAME, the data driver 300 outputs data voltages whose polarities are reversed with respect to the data voltages applied to the pixels of the N-th pixel column during the (N+2)-th frame (N+2) FRAME and have an order of negative (-), positive (+), positive (+), negative (-), negative (-), positive (+), and positive (+) polarities to the pixels of the N-th pixel column.

As such, the data voltages applied to the display panel 100 are reversed at a one-frame period in the 2D flat image mode.

Referring to FIG 7B, a 3D reverse signal 3D_REV3 reverses polarities of data voltages at a (1+2)-horizontal-line period in a frame and at a two-frame period. For example, during a frame, the 3D reverse signal 3D_REV3 reverses polarities of data voltages of first and second horizontal lines to each other, and reverses polarities of data voltages from the second horizontal line to a last horizontal line at a two-horizontal-line period. According to an embodiment, the 3D reverse signal 3D_REV3 reverses the polarities of the data voltages at a two-frame period.

For example, during the N-th frame N FRAME, the data driver 300 outputs data voltages whose polarities are reversed at a (1+2)-horizontal-line period and have an order of positive (+), negative (-), negative (-), positive (+), positive (+), negative (-), and negative (-) polarities to the pixels of the N-th pixel column. During the (N+1)-th frame (N+1) FRAME, the data driver 300 outputs data voltages having polarities the same or substantially the same as the polarities of the data voltages applied to the pixels of the N-th pixel column during the N-th frame N FRAME to the pixels of the N-th pixel column. During the (N+2)-th frame N+2 FRAME, the data driver 300 outputs data voltages whose polarities are reversed at a two-frame period to the pixels of the N-th pixel column. For example, data voltages whose polarities are reversed with respect to the data voltages applied to the pixels of the N-th pixel column during the (N+1)-th frame (N+1) FRAME and have an order of negative (-), positive (+), positive (+), negative (-), negative (-), positive (+), and positive (+) polarities are applied to the pixels of the N-th pixel column during the (N+2)-th frame N+2 FRAME During the (N+3)-th frame (N+3) FRAME, the data driver 300 outputs data voltages having polarities the same or substantially the same as the polarities of the data voltages applied to the pixels of the N-th pixel column during the (N+2)-th frame (N+2) FRAME to the pixels of the N-th pixel column.

As such, the data voltages applied to the display panel 100 are reversed at a two-frame period in the 3D stereoscopic image mode.

Referring to FIGS. 7B and 8, the polarities of the data voltages are reversed based on the 3D reverse signal 3D_REV3 at a two-frame period. Regarding the polarities of the data voltages applied to the pixels of the N-th pixel columns PCn, the data voltages of a left-eye image frame of the N-th frame N FRAME have an order of positive (+), negative (-), negative (-), positive (+), positive (+), and negative (-) polarities, and the data voltages of a left-eye image frame of the (N+2)-th frame (N+2) FRAME have an order of negative (-), positive (+), positive (+), negative (-), negative (-), and positive (+) polarities. According to an embodiment, the data voltages of a right-eye image frame of the (N+1)-th frame (N+1) FRAME have an order of positive (+), negative (-), negative (-), positive (+), positive (+), and negative (-) polarities, and the data voltages of a right-eye image frame of the (N+3)-th frame (N+3) FRAME have an order of negative (-), positive (+), positive (+), negative (-), negative (-), and positive (+) polarities.

As a consequence, the data voltages of the sequential left-eye image frames or the sequential right-eye image frames have different polarities from each other. Accordingly, a DC voltage is prevented from being charged to a liquid crystal layer of the display panel 100 displaying the left-eye image frame or the right-eye image frame, thus enhancing display quality.

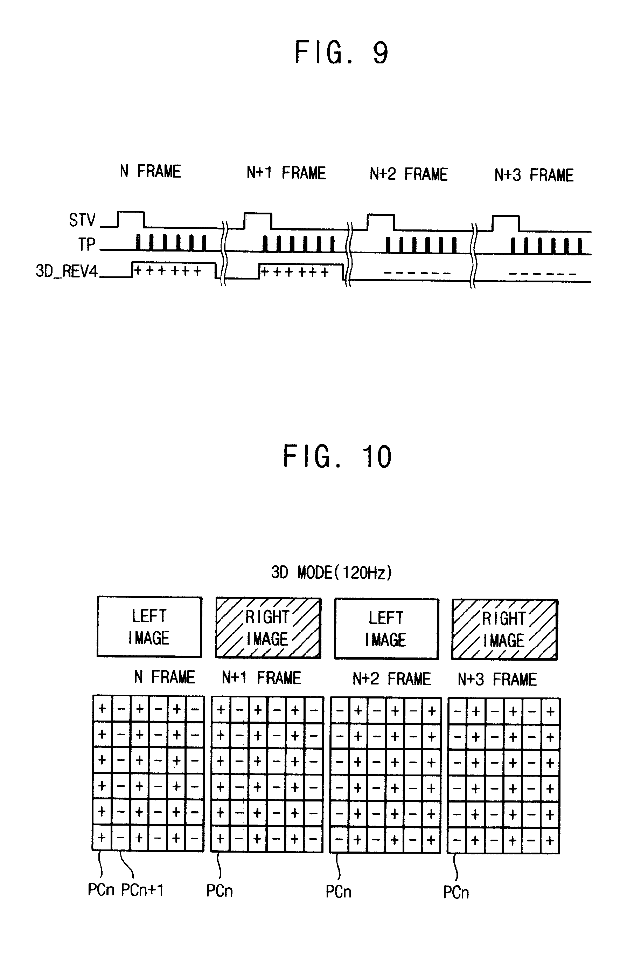

FIG 9 is a timing chart of control signals inputted to a data driver according to an exemplary embodiment of the present invention. FIG 10 is a conceptual diagram for describing a method for driving a display panel according to the control signals of FIG 9.

According to embodiments, various signals, such as, for example, the 2D reverse signals 2D_REV1, 2D_REV2, or 2D_REV3 as described in connection with Figs. 3A, 5A, and 7A may be used as a 2D reverse signal.

Referring to FIGS. 9 and 10, a 3D reverse signal 3D_REV4 reverses polarities of data voltages at a one-pixel-column period in a frame and at a two-frame period. For example, during a frame, the 3D reverse signal 3D_REV4 maintains the same or substantially the same polarity for data voltages of the same or substantially the same pixel columns and reverses polarities of data voltages of N-th and (N+1)-th pixel columns to each other. According to an embodiment, the 3D reverse signal 3D_REV4 reverses the polarities of the data voltages at a two-frame period.

For example, during an N-th frame N FRAME, the data driver 300 outputs data voltages having a positive (+) polarity to pixels of an N-th pixel column PCn and outputs data voltages having a negative (-) polarity to pixels of an (N+1)-th pixel column PC(n+1). During an (N+1)-th frame (N+1) FRAME, the data driver 300 outputs data voltages having polarities the same or substantially the same as the polarities of the data voltages applied to the pixels of the N-th pixel column during the N-th frame N FRAME to the pixels of the N-th pixel column PCn. During an (N+2)-th frame (N+2) FRAME, the data driver 300 outputs data voltages whose polarities are reversed at a two-frame period to the pixels of the N-th pixel column PCn. For example, data voltages whose polarities are reversed with respect to the data voltages applied to the pixels of the N-th pixel column during the (N+1)-th frame (N+1) FRAME and have a negative (-) polarity are applied to the pixels of the N-th pixel column PCn during the (N+2)-th frame (N+2) FRAME During an (N+3)-th frame (N+3) FRAME, the data driver 300 outputs data voltages having polarities the same or substantially the same as the polarities of the data voltages applied to the pixels of the N-th pixel column during the (N+2)-th frame (N+2) FRAME to the pixels of the N-th pixel column PCn.

As such, the data voltages applied to the display panel 100 are reversed at a one-pixel-column period in a frame and at a two-frame period in the 3D stereoscopic image mode.

The polarities of the data voltages are reversed based on the 3D reverse signal 3D_REV4 at a two-frame period. Regarding the polarities of the data voltages applied to the pixels of the N-th pixel columns PCn, the data voltages of a left-eye image frame of the N-th frame N FRAME have a positive (+) polarity, and the data voltages of a left-eye image frame of the (N+2)-th frame (N+2) FRAME have a negative (-) polarity. According to an embodiment, the data voltages of a right-eye image frame of the (N+1)-th frame (N+1) FRAME have a positive (+) polarity, and the data voltages of a right-eye image frame of the (N+3)-th frame (N+3) FRAME have a negative (-) polarity.

As a consequence, the data voltages of the sequential left-eye image frames or the sequential right-eye image frames have different polarities from each other. Accordingly, a DC voltage is prevented from being charged to a liquid crystal layer of the display panel 100 displaying the left-eye image frame or the right-eye image frame, thus enhancing display quality. The polarities of the data voltages are reversed at a two-frame period, so that power consumption is decreased, and a charging rate is increased.

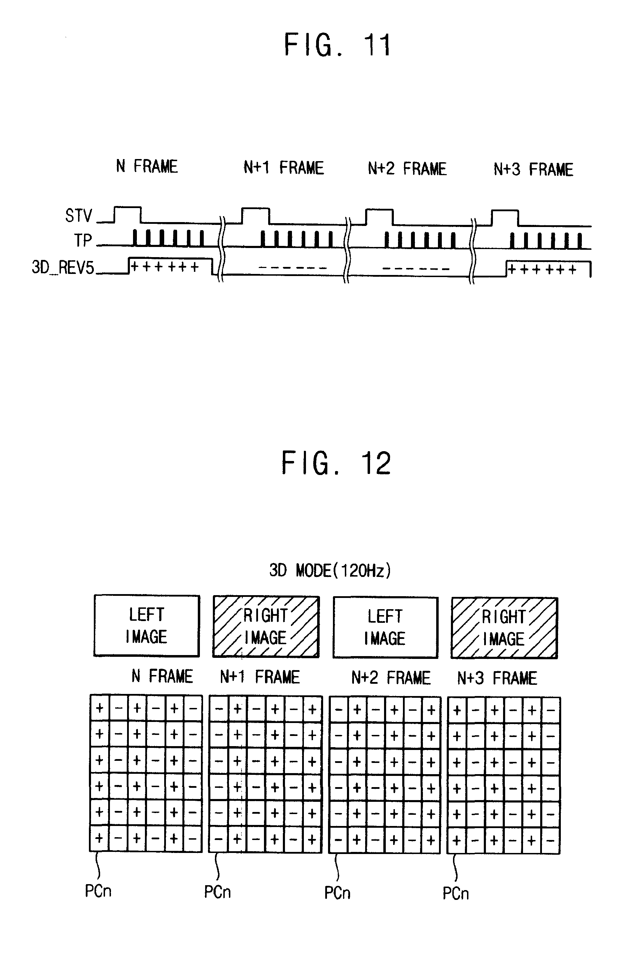

FIG 11 is a timing chart of control signals inputted to a data driver according to an exemplary embodiment of the present invention. FIG 12 is a conceptual diagram for describing a method for driving a display panel according to the control signals of FIG 11.

According to embodiments, various signals, such as, for example, 2D_REV, 2D_REV2, or 2D_REV3 as described in connection with FIGs. 3A, 5A, and 7A may be used as a 2D reverse signal.

Referring to FIGS. 11 and 12, a 3D reverse signal 3D_REV5 reverses polarities of data voltages at a one-pixel-column period in a frame and at a (1+2)-frame period. During a frame, the 3D reverse signal 3D_REV5 maintains the same or substantially the same polarity for data voltages of the same or substantially the same pixel columns and reverses polarities of data voltages of N-th and (N+1)-th pixel columns to each other. According to an embodiment, the 3D reverse signal 3D_REV5 reverses the polarities of the data voltages of N-th and (N+1)-th frames N FRAME and N+1 FRAME to each other and reverses the polarities of the data voltages from the (N+1)-th frame N+1 FRAME to a last frame at a two-frame period.

For example, during the N-th frame N FRAME, the data driver 300 outputs data voltages having a positive (+) polarity to the pixels of the N-th pixel column PCn and outputs data voltages having a negative (-) polarity to pixels of an (N+1)-th pixel column PC(n+1). During the (N+1)-th frame (N+1) FRAME, the data driver 300 outputs data voltages whose polarities are reversed with respect to the polarities of the data voltages applied to the pixels of the N-th pixel column PCn during the N-th frame N FRAME and have a negative (-) polarity to the pixels of the N-th pixel column PCn. During an (N+2)-th frame (N+2) FRAME, the data driver 300 outputs data voltages whose polarities are reversed with respect to the polarities of the data voltages applied to the pixels of the N-th pixel column PCn during the N-th frame N FRAME at a two-frame period to the pixels of the N-th pixel column PCn. For example, data voltages whose polarities are the same or substantially the same as the polarities of the data voltages applied to the pixels of the N-th pixel column during the (N+1)-th frame (N+1) FRAME and have a negative (-) polarity are applied to the pixels of the N-th pixel column PCn during the (N+2)-th frame (N+2) FRAME During an (N+3)-th frame (N+3) FRAME, the data driver 300 outputs data voltages whose polarities are reversed with respect to the polarities of the data voltages applied to the pixels of the N-th pixel column during the (N+2)-th frame (N+2) FRAME and have a positive (-) polarity to the pixels of the N-th pixel column PCn.

As such, the data voltages applied to the display panel 100 are reversed at a one-pixel-column period in a frame and at a (1+2)-frame period in the 3D stereoscopic image mode.

The polarities of the data voltages are reversed based on the 3D reverse signal 3D_REV5 at a (1+2)-frame period. Regarding the polarities of the data voltages applied to the pixels of the N-th pixel columns PCn, the data voltages of a left-eye image frame of the N-th frame N FRAME have a positive (+) polarity, and the data voltages of a left-eye image frame of the (N+2)-th frame (N+2) FRAME have a negative (-) polarity. According to an embodiment, regarding the polarities of the data voltages applied to the pixels of the N-th pixel columns PCn, the data voltages of a right-eye image frame of the (N+1)-th frame (N+1) FRAME have a negative (-) polarity, and the data voltages of a right-eye image frame of the (N+3)-th frame (N+3) FRAME have a positive (+) polarity.

As a consequence, the data voltages of the sequential left-eye image frames or the sequential right-eye image frames have different polarities from each other. Accordingly, a DC voltage is prevented from being charged to a liquid crystal layer of the display panel 100 displaying the left-eye image frame or the right-eye image frame, thus enhancing display quality. The polarities of the data voltages are reversed at a two-frame period, so that power consumption is decreased, and a charging rate is increased.

According to the exemplary embodiments of the present invention, in the 3D stereoscopic image mode, the polarities of the data voltages are reversed at a period of a plurality of frames, so that display quality of the 3D stereoscopic image is enhanced. According to the embodiments, the polarities of the data voltages are reversed at a one-pixel-column period during a frame, so that power consumption is decreased, and a charging rate is increased.

The foregoing is illustrative of the embodiments of the present invention and is not to be construed as limiting thereof. Although a few exemplary embodiments of the present invention have been described, those skilled in the art will readily appreciate that many modifications are possible in the exemplary embodiments without materially departing from the novel teachings and advantages of the present invention. Accordingly, all such modifications are intended to be included within the scope of the present invention as defined in the claims.

## Claims

1. A method of driving a display panel, the method comprising:
determining whether an image mode of an image signal is a two-dimensional (2D) flat image mode or a three-dimensional (3D) stereoscopic image mode;
generating a first reverse signal and a second reverse signal different from the first reverse signal according to the determined image mode; and
converting the image signal to a first polarity data voltage or a second polarity data voltage with respect to a reference voltage based on the first reverse signal or the second reverse signal and outputting the first polarity data voltage or the second polarity data voltage to a display panel.

2. The method of claim 1, wherein the first reverse signal is generated when the determined image mode is the 2D flat image mode, and the second reverse signal having a frame period different from a frame period of the first reverse signal is generated when the determined image mode is the 3D stereoscopic image mode.

3. The method of claim 2, wherein the first reverse signal reverses a polarity of the data voltage at a one-frame period.

4. The method of claim 2, wherein the second reverse signal reverses a polarity of the data voltage at a two-frame period.

5. A display apparatus comprising:
a display panel displaying an image;
a controller determining whether an image mode of an image signal is a 2D flat image mode or a 3D stereoscopic image mode and generating a first reverse signal and a second reverse signal different from the first reverse signal according to the determined image mode; and
a data driver converting the image signal to a first polarity data voltage or a second polarity data voltage with respect to a reference voltage based on the first reverse signal or the second reverse signal and outputting the first polarity data voltage or the second polarity data voltage to the display panel.

6. The display apparatus of claim 5, further comprises:
a mode decider determining the image mode; and
a control signal generator generating the first reverse signal when the determined image mode is the 2D flat image mode, and generating the second reverse signal having a frame period different from a frame period of the first reverse signal when the determined image mode of the image signal is the 3D stereoscopic image mode.

7. The display apparatus of claim 6, wherein the control signal generator generates the first reverse signal reversing a polarity of the data voltage at a one-frame period.

8. The display apparatus of claim 6, wherein the control signal generator generates the second reverse signal reversing a polarity of the data voltage at a two-frame period.

9. The display apparatus of claim 8, wherein the data driver outputs, based on the second reverse signal, the first polarity data voltage of a left-eye image frame to the display panel during an N-th frame, the first polarity data voltage of a right-eye image frame to the display panel during an (N+1)-th frame, the second polarity data voltage of the left-eye image frame to the display panel during an (N+2)-th frame, and the second polarity data voltage of the right-eye image frame to the display panel during an (N+3)-th frame, wherein, N is a natural number.

10. The display apparatus of claim 8, wherein the second reverse signal maintains polarities of data voltages of the same or substantially the same pixel columns in a frame to be the same or substantially the same as each other, and reverses polarities of data voltages of N-th and (N+1)-th pixel columns to be opposite to each other, wherein, N is a natural number.

11. The display apparatus of claim 6, wherein the control signal generator generates the second reverse signal reversing polarities of data voltages of first and second frames to be opposite to each other, and reversing polarities of data voltages from the second frame to a last frame at a two-frame period to be opposite to each other in the 3D stereoscopic image mode.

12. The display apparatus of claim 11, wherein the data driver outputs, based on the second reverse signal, the first polarity data voltage of a left-eye image frame to the display panel during an N-th frame, the second polarity data voltage of a right-eye image frame to the display panel during an (N+1)-th frame, the second polarity data voltage of the left-eye image frame to the display panel during an (N+2)-th frame, and the first polarity data voltage of the right-eye image frame to the display panel during an (N+3)-th frame, wherein, N is a natural number.

13. The display apparatus of claim 12, wherein the second reverse signal maintains polarities of data voltages of the same or substantially the same pixel columns in a frame to be the same or substantially the same as each other, and reverses polarities of data voltages of N-th and (N+1)-th pixel columns to be opposite to each other.

14. The display apparatus of claim 6, wherein the second reverse signal reverses polarities of data voltage in a frame at a K-horizontal-line period, wherein, K is a natural number.

15. A method of driving a display panel, comprising:
determining an image mode based on a received image signal;
outputting a reverse signal based on the image mode; and
reversing at a predetermined period polarities of data voltages based on the reverse signal.
